# EUROPEAN PATENT APPLICATION

(11) **EP 3 868 928 A1**
(43) Date of publication of application: **25.08.2021**
(21) Application number: 21158052.7
(22) Date of filing: 19.02.2021
(51) Int. Cl.: D01D 5/08, C08G 18/48, D01D 5/16, D01D 5/34, D01F 6/70, D01F 8/16

(54) **HYDROLYSIS-RESISTANT THERMOPLASTIC POLYURETHANE FIBER AND METHOD FOR PRODUCING THE SAME**

(30) Priority: 20.02.2020 TW 109105530
(71) Applicant: San Fang Chemical Industry Co., Ltd., Kaohsiung City 814 (TW)
(72) Inventor: LIN, Chih-Yi, 814 Kaohsiung City (TW); CHENG, Kuo-Kuang, 814 Kaohsiung City (TW); YANG, Kao-Lung, 814 Kaohsiung City (TW); CHANG, Shih-Peng, 814 Kaohsiung City (TW)
(74) Representative: Cabinet Beaumont

(57) **Abstract**

The present invention relates to a hydrolysis-resistant thermoplastic polyurethane fiber and a method for producing the same. The thermoplastic polyurethane fiber has a lower thermal shrinking property and an excellent hydrolysis-resistant property, thereby meeting requirements of the application. In the method for producing the hydrolysis-resistant thermoplastic polyurethane fiber, a thermoplastic polyurethane material is firstly provided and subjected to a melt spinning process to form a fiber material. Next, a drawing process is performed to the fiber material to obtain the hydrolysis-resistant thermoplastic polyurethane fiber of the present invention.

## Description

### BACKGROUND

### Field of Invention

The present invention relates to a thermoplastic polyurethane fiber. More particularly, a thermoplastic polyurethane fiber with low thermal shrinking ratio and hydrolysis-resistant and a method for producing the same are provided.

### Description of Related Art

The thermoplastic polyurethane elastomers are widely used because of its excellent recyclability, processability and mechanical properties. Besides, the thermoplastic polyurethane elastomers have good dyeability, therefore the thermoplastic polyurethane elastomers are often processed into fiber materials.

Generally, in order to produce thermoplastic polyurethane fibers, especially for improving mechanical properties thereof, a crosslinking agent is often added during a melting process to induce a crosslinking reaction so as to produce the thermoplastic polyurethane fiber. Otherwise, the fiber produced in absence of the crosslinking agent has more sensitive to temperature changes, so that it shrinks too easily at high temperature to meet requirements of applications.

Although the crosslinking agent is beneficial to reduce the thermal shrinking rate of the thermoplastic polyurethane fiber, environmental protection, the recyclability of the thermoplastic polyurethane fiber dramatically reduces, as its applications become increasingly diverse and the recycling requirements of environmental protection are more stringent. Therefore, the thermoplastic polyurethane fiber produced with the crosslinking agent could not satisfy requirements of environmental protection.

A soft segment of the thermoplastic polyurethane fiber can have polyol structure, and the polyol structure can be polyester based structure. Because the polyester based thermoplastic polyurethane fiber has excellent physical properties and can endure higher temperature, the polyester based thermoplastic polyurethane fiber is widely used. However, the polyester based thermoplastic polyurethane fiber is easily hydrolyzed due to moisture in storage or recycling processes. During the hydrolysis, acidic groups are generated and catalyze more hydrolysis reactions, therefore significantly lowering physical properties of the polyester based thermoplastic polyurethane fiber.

In view of this, there is an urgent need to provide a hydrolysis-resistant thermoplastic polyurethane fiber and a method for producing the same for improving the disadvantages of the conventional thermoplastic polyurethane fiber which cannot give consideration to thermal shrinking property and recyclability, and further overcoming the limitation of its application that the thermoplastic polyurethane fiber is easily hydrolyzed.

### SUMMARY

Therefore, one aspect of the present disclosure is providing a hydrolysis-resistant thermoplastic polyurethane fiber, and the hydrolysis-resistant thermoplastic polyurethane fiber has lower thermal shrinking ratio and better recyclability.

Another aspect of the present disclosure is providing a method for producing a hydrolysis-resistant thermoplastic polyurethane fiber. The method subjects a molten extruded fiber material to be extended at specific temperature, such that the hydrolysis-resistant thermoplastic polyurethane fiber has lower thermal shrinking ratio.

According to the aforementioned aspect of the present invention, a hydrolysis-resistant thermoplastic polyurethane fiber is provided. A thermal shrinking ratio of the hydrolysis-resistant thermoplastic polyurethane fiber is not larger than 10%, and the hydrolysis-resistant thermoplastic polyurethane fiber excludes a crosslinking agent.

According to some embodiments of the present invention, the hydrolysis-resistant thermoplastic polyurethane fiber includes a polyether based thermoplastic polyurethane material. The hydrolysis-resistant thermoplastic polyurethane fiber has a sheath-core structure or a single fiber structure. The thermal shrinking ratio of the hydrolysis-resistant thermoplastic polyurethane fiber is not larger than 6%.

According to the further aspect of the present invention, a method for producing a hydrolysis-resistant thermoplastic polyurethane fiber is provided. A thermoplastic polyurethane material is firstly provided, and the thermoplastic polyurethane material is subjected to a melt spinning process to form a fiber material. The thermoplastic polyurethane material is a polyether based thermoplastic polyurethane material, and a melting point of the thermoplastic polyurethane material is 70°C to 180°C. The fiber material includes a monofilament or a multifilament. And then, the fiber material is subjected to a drawing process to form the hydrolysis-resistant thermoplastic polyurethane fiber. The drawing process includes at least two steps, and each of the steps is performed at 60°C to 120°C.

According to some embodiments of the present invention, Shore D of the thermoplastic polyurethane material is 35D to 75D. The melt spinning process is performed in absence of a crosslinking agent. A number of times of the drawing steps are two to four. Each of the drawing steps is performed at 70°C to 110°C. A total drawing ratio of the fiber material in the drawing process is 1 to 3.

In the hydrolysis-resistant thermoplastic polyurethane fiber and the method for producing the same, the polyether based thermoplastic polyurethane fiber has excellent hydrolysis-resistant properties and better storage stability. In the method for producing the polyether based thermoplastic polyurethane fiber, the crosslinking reaction of the thermoplastic polyurethane is performed without the crosslinking agent, and the fiber material is further treated at specific drawing temperature, thereby adjusting mechanical properties thereof, and further lowering the thermal shrinking ratio of the thermoplastic polyurethane fiber.

### BRIEF DESCRIPTION OF THE DRAWINGS

The invention can be more fully understood by reading the following detailed description of the embodiment, with reference made to the accompanying drawings as follows:
FIG. 1 illustrates a flow chart of a method for producing a hydrolysis-resistant thermoplastic polyurethane fiber according to some embodiments of the present invention.
FIG. 2 illustrates the drawing system suitable for the monofilament material according to some embodiments of the present invention.
FIG. 3A and FIG. 3B respectively illustrate the drawing system suitable for the multifilament material according to some embodiments of the present invention.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

The term "hydrolysis-resistant" of the present invention is measured by a standard evaluation method DIN 53543. "Hydrolysis-resistant" represents a decreasing of the tenacity of the thermoplastic polyurethane fiber is not larger than 10% after it is disposed in an environment of 70°C with a humidity of 95% for one week.

A hydrolysis-resistant thermoplastic polyurethane fiber of the present invention has lower thermal shrinking ratio and excellent mechanical properties, and a crosslinking reaction of the hydrolysis-resistant thermoplastic polyurethane fiber of the present invention excludes a crosslinking agent. Therefore, the hydrolysis-resistant thermoplastic polyurethane fiber of the present invention has excellent recyclability, thereby meeting requirements of the applications.

For example, based on a standard evaluation method ASTM D4974 and a measuring temperature at 105°C, the hydrolysis-resistant thermoplastic polyurethane fiber of the present invention has thermal shrinking ratio not larger than 10%, and preferably has thermal shrinking ratio not larger than 6%. It is realized that because the hydrolysis-resistant thermoplastic polyurethane fiber of the present invention has lower thermal shrinking ratio, it does not easily be deformed by heat while it is applied. Accordingly, the hydrolysis-resistant thermoplastic polyurethane fiber has better dimensional stability and wider application filed. Besides, based on the standard evaluation method ASTM D3822, the hydrolysis-resistant thermoplastic polyurethane fiber has an elongation at break mot less than 75%.

In some embodiments, when a fiber material of the present invention is made from polyether based thermoplastic polyurethane materials, the hydrolysis-resistant thermoplastic polyurethane fiber has better hydrolysis-resistant properties. The hydrolysis-resistant thermoplastic polyurethane fiber has a sheath-core structure or a single fiber structure. Further, the hydrolysis-resistant thermoplastic polyurethane fiber can be suitable for a weaving process, a knitting process and other general processes.

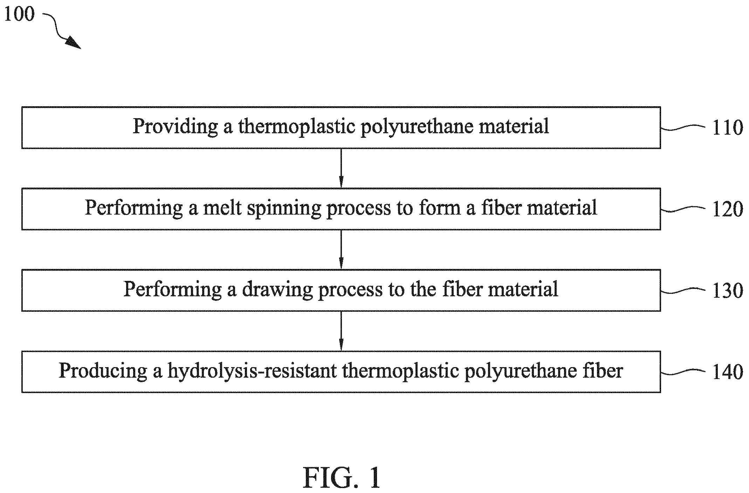

Besides excluding a crosslinking agent, a melt spinning fiber material of the present invention is extended at specific temperature, such that the hydrolysis-resistant thermoplastic polyurethane fiber has lower thermal shrinking ratio. Referring to FIG. 1, it illustrates a flow chart of a method for producing the hydrolysis-resistant thermoplastic polyurethane fiber according to some embodiments of the present invention. In the method 100, a thermoplastic polyurethane material is firstly provided, and subjected to a melt spinning process to form the fiber material, as shown in operations 110 and 120.

The thermoplastic polyurethane material (TPU) can be polyether based thermoplastic polyurethane materials. When the thermoplastic polyurethane material of the present invention is polyether based thermoplastic polyurethane materials, the thermoplastic polyurethane fiber has excellent hydrolysis-resistant properties and physical properties. More preferably, a melting point of the thermoplastic polyurethane material is 70°C to 180°C. If the melting point of the thermoplastic polyurethane material is not in the aforementioned range, the thermoplastic polyurethane fiber would not meet the requirements of the applications. In some embodiments, the melting point of the thermoplastic polyurethane material preferably is 150°C to 180°C.

In some embodiments, Shore D of the thermoplastic polyurethane material is 35Dto 75D, preferable is 45D to 75D, and more preferably is 55D to 75D. If Shore D of the thermoplastic polyurethane material is in the aforementioned range, the thermoplastic polyurethane fiber would have better mechanical properties, thereby satisfying the requirements of the application.

In operation 120, the thermoplastic polyurethane material is firstly added to a melting device of a melt spinning machine, thereby melting the polyurethane material with high temperature to form a molten liquid. Then, the molten liquid is extruded by spinneret for forming the fiber material of the present invention. It is realized that the material is melted at a temperature higher than the melting point of the polyurethane material in the melting device. Moreover, parameters of the melt spinning process of the present invention are well known to one skilled in the art rather than focusing or mentioning them in details. Based on types of the melt spinning process, the fiber material can be monofilament materials or multifilament materials. In operation 120, the fiber material is made from the thermoplastic polyurethane material without a crosslinking agent. Therefore, the thermoplastic polyurethane fiber of the present invention has excellent recyclability.

After the operation 120 is performed, the fiber material is subjected to a drawing process, as shown in operation 130. The drawing process comprises at least two drawing steps, and each of the drawing steps is performed at 60°C to 120°C. During the drawing process, the fiber material is extended to adjust properties of the fiber material, thereby subjecting the final thermoplastic polyurethane fiber to satisfy the requirements of the applications. If a number of times of the drawing steps is less than two, the fiber material would not be drawing sufficiently, such that the thermoplastic polyurethane fiber does not have suitable mechanical properties and cannot meet requirements of the applications. It is realized that when a number of times of the drawing steps is less than two, although operators can solve defects of the fiber material without extending sufficiently by enhancing drawing ratio, the fiber material is easily to be broken due to too high extension ratio. In some embodiments, the drawing process can comprise two to six of drawing steps, and preferably comprise two to four of drawing steps. In some embodiments, each drawing steps can be performed at the same temperature or different temperatures, and each can have the same drawing ratio or different drawing ratios. In order to achieve much better drawing efficiency, each of the drawing steps can be performed at 70°C to 110°C.

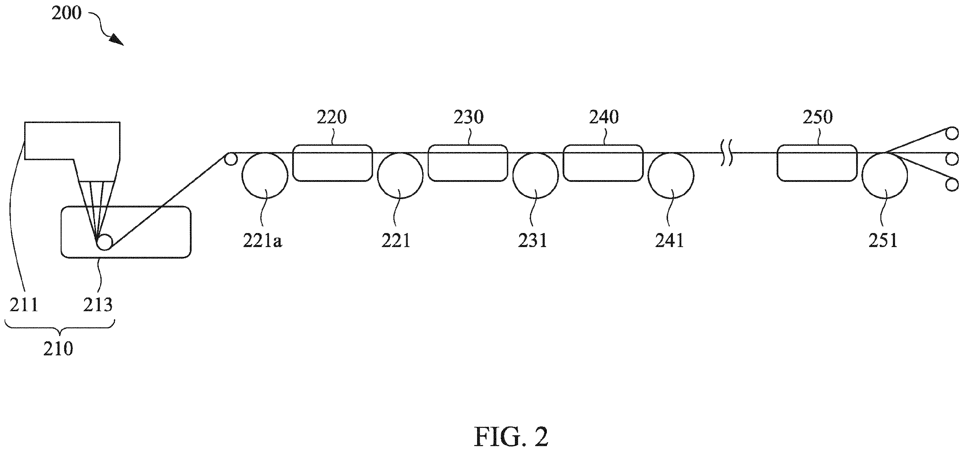

When the fiber material is a monofilament, referring to FIG. 1 and FIG. 2 simultaneously, FIG. 2 illustrates the drawing system suitable for the monofilament material according to some embodiments of the present invention. The drawing system 200 is suitable for monofilament types, and the drawing system 200 can comprise a melt spinning machine 210, a hot bath 220, three drawing units 230, 240 and 250, and five rollers 221a, 221, 231, 241 and 251. The melt spinning machine 210 comprise a melt spinning unit 211 and a cooling bath 213.

In the drawing system 200, the thermoplastic polyurethane material is added into the melt spinning unit 211 to perform the aforementioned melt spinning process (i.e. operation 120). Then, the monofilament extruded from the spinneret is firstly cooled by the cooling bath 213. The cooled monofilament is coiled on the roller 221a, and be heated by the hot bath 220, and then coiled on the roller 221, thereby subjecting to the drawing step. Next, the monofilament which has been subjected to the first drawing is further subjected to the following drawing steps with the drawing units 230, 240 and 250 and the rollers 231, 241 and 251 in sequence. The drawing units 230, 240 and 250 can heat the monofilament with hot air, thereby being contributed to the performing of the drawing steps.

As shown in FIG. 2, although the monofilament is subjected to four drawing steps with the hot bath 220 and the drawing units 230, 240 and 250 respectively, it is not limited to the present invention. Based on aforementioned description, a number of times of the drawing steps can be at least two, such that there are additional drawing units between the drawing units 240 and 250 to perform more drawing steps to the monofilament.

In other embodiments, the monofilament can also be subjected to the drawing with a drawing system which merely comprises two drawing units. In other words, in these embodiments, the monofilament is subjected to three drawing steps by the hot bath and two drawing units. For example, the monofilament which has been extended by the hot bath can be subjected to the drawing with drawing ratio of 1 to 2, and then being subjected to the extension with drawing ratio of 0.95 to 1.5.

After the last drawing step is performed with the drawing unit 250, the hydrolysis-resistant thermoplastic polyurethane fiber made from the monofilament can be produced.

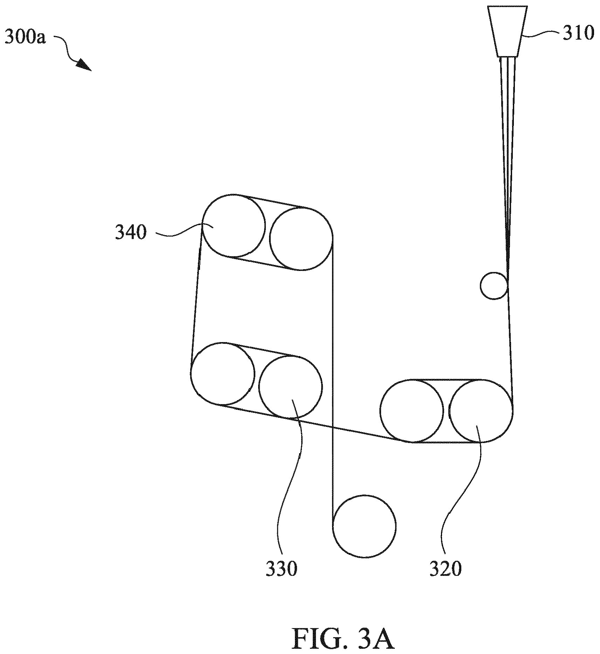

When the fiber material is a multifilament, referring to FIG. 1 and FIG. 3A simultaneously. FIG. 3A illustrates the drawing system suitable for the multifilament material according to some embodiments of the present invention. The drawing system 300a is suitable for the multifilament, and the drawing system 300a comprises a spinneret 310 and three drawing roller pairs 320, 330 and 340. For description clearly, it is realized that the drawing system 300a also comprises a melt spinning machine (not illustrated) well known to one skilled in the art, and the spinneret 310 is disposed in the melt spinning machine for extruding the multifilament. The melt spinning machine for the multifilament is well known to one skilled in the art rather than focusing or mentioning it in details. Further, one skilled in the art can realize that the multifilament made from the spinneret 310 can be cooled by conventional air-cooling unit.

Referring to FIG. 1 and FIG. 3A simultaneously. Similar to the described drawing system 200 as the aforementioned FIG. 2, the multifilament is made from the molten polyurethane material by the spinneret 310. After it is cooled by air, the multifilament is further subjected to the drawing processes by the drawing roller pairs 320, 330 and 340 in sequence. When the drawing process is performed, each drawing roller pairs 320, 330 and 340 can have the same surface temperature or different surface temperature, and have the same surface linear velocity. In some examples, each drawing steps (i.e. the drawing for the multifilament with the drawing roller pairs 320 and 330 and the drawing roller pairs 330 and 340) can be performed at 60°C to 120°C, and preferably at 70°C to 110°C. After the second drawing step with the drawing roller pairs 330 and 340 is performed, the thermoplastic polyurethane fiber with the multifilament types is obtained. It can be realized that the number of times of the drawing steps can be at least two, such that additional drawing roller pairs are selectively disposed between the drawing roller pairs 330 and 340 and/or behind the drawing roller pairs 340 to perform much more times of drawing steps.

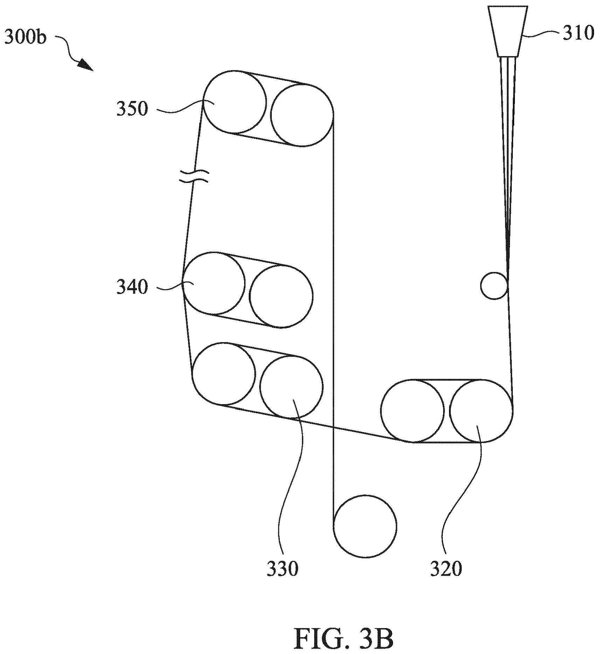

Referring to FIG. 3B. FIG. 3B illustrates the drawing system suitable for the multifilament material according to some embodiments of the present invention. The drawing system 300b of FIG. 3B is substantially similar to the drawing system 300a of FIG. 3A in structure, but the difference therebetween resides in that the drawing system 300b further comprises a drawing roller pair 350. Therefore, the drawing system 300b is performed three drawing steps to the multifilament with the drawing roller pairs 320, 330, 340 and 350.

Referring to FIG. 1. After the operation 130 is performed, the hydrolysis-resistant thermoplastic polyurethane fiber of the present invention is produced, as shown in operation 140. In some embodiments, a total drawing ratio of the fiber material which has been subjected to the drawing process can be 1 to 3, and preferably be 1.5 to 2.5. The hydrolysis-resistant thermoplastic polyurethane fiber has lower thermal shrinking ratio, thereby equipping with excellent dimensional stability. Further, the hydrolysis-resistant thermoplastic polyurethane fiber does not be subjected to a crosslinking reaction with a crosslinking agent, such that it has excellent recyclability.

### Embodiment 1

A hydrolysis-resistant thermoplastic polyurethane fiber of Embodiment 1 was made from ether based thermoplastic polyurethane materials (Shore D was 55D, a melting point thereof was 150°C, and melt flow index thereof was 22 with 2.16 kg of a loading at 210°C based on standard evaluation method ASTM D1238). Then, the thermoplastic polyurethane material was disposed in a drying tank, and dried at 90°C. After 4 hours, a moisture content of the thermoplastic polyurethane material was less than or equal to 150 ppm.

Next, a monofilament of Embodiment 1 was produced by a drawing system suitable for the monofilament. There were four segments between an inlet and an extrusion port, and temperature of the four segments were respectively 210°C, 215°C, 220°C and 230°C. A temperature of a cooling bath was 16°C.

Then, the cooled monofilament was coiled on a first drawing roller, further heating in a hot bath, and further coiled on a second drawing roller to be subjected to a first drawing step. A surface linear velocity of the first drawing roller was 30 m/min, temperature of the hot bath was 60°C, and a surface linear velocity of the second drawing roller was 85 m/min. A drawing ratio of the first drawing step was 2.5.

Thereafter, the monofilament which has been subjected to the first drawing step was heated with a hot air, and the monofilament was further coiled on a third drawing roller to be subjected to a second drawing step. Temperature of the hot air was 85°C, and a surface linear velocity of the third drawing roller was 115 m/min. A drawing ratio of the second drawing step was 1.53.

And then, the monofilament which has been subjected to the second drawing step was heated with a hot air, and further coiled on a fourth drawing roller to be subjected to a third drawing step, and then being subjected to a heat setting, thereby obtaining the polyether based thermoplastic polyurethane fiber of Embodiment 1. A temperature of the hot air was 100°C, and a surface linear velocity of the fourth drawing roller was 110 m/min. A drawing ratio of the third drawing step was 0.957.

The polyether based thermoplastic polyurethane fiber was winded to form a cake by a filament winding machine, and a wilding velocity of the filament winding machine was 112 m/min. In the polyether based thermoplastic polyurethane fiber of Embodiment 1, fineness was 350D, a tenacity was 2.5 g/d and an elongation at break was 82% measured by ASTM D3822, and a thermal shrinking ratio measured by ASTM D4974 was 3.5%.

### Embodiment 2

A hydrolysis-resistant thermoplastic polyurethane fiber of Embodiment 2 was made from polyether based thermoplastic polyurethane materials (Shore D was 55D, a melting point thereof was 150°C, and melt flow index thereof was 21 with 2.16 kg of a loading at 210°C based on standard evaluation method ASTM D1238). Then, the thermoplastic polyurethane material was disposed in a drying tank, and dried at 90°C. After 4 hours, a moisture content of the thermoplastic polyurethane material was less than or equal to 150 ppm.

Next, a multifilament of Embodiment 2 was produced by a drawing system suitable for the multifilament. There were three segments between an inlet and an extrusion port, and temperatures of the three segments were respectively 180°C, 195°C and 210°C. A temperature of a cooling air was 21 °C, and relative humidity thereof was 82%.

Then, the cooled multifilament was coiled on a first drawing roller pair, and further coiled on a second drawing roller pair to be subjected to a first drawing step. A surface linear velocity of the first drawing roller pair was 1580 m/min, and a surface temperature of the first drawing roller pair was 70°C; a surface linear velocity of the second drawing roller pair was 2400 m/min, and a surface temperature of the second drawing roller pair was 90°C. A drawing ratio of the first drawing step was 1.52.

Thereafter, the multifilament which has been subjected to the first drawing step was coiled on a third drawing roller pair to be subjected to a second drawing step and a heat setting, thereby obtaining the polyether based thermoplastic polyurethane fiber of Embodiment 2. A surface linear velocity of the third drawing roller pair was 2420 m/min, and a surface temperature of the third drawing roller pair was 110°C. A drawing ratio of the second drawing step was about 1.

The polyether based thermoplastic polyurethane fiber was winded to form a cake by a filament winding machine, and a wilding velocity of the filament winding machine was 2200 m/min. Evaluation results of the polyether based thermoplastic polyurethane fiber of Embodiment 2 were listed in Table 1 rather than focusing or mentioning them in details.

### Comparative Embodiment 1

Comparative Embodiment 1 was practiced with the same method, raw materials, parameters (such as melt spinning temperature, surface linear velocity, drawing ratio and the like), and evaluation method as in Embodiment 1. The differences between Comparative Embodiment 1 and Embodiment 1 were that the first drawing step of Comparative Embodiment 1 was performed to the monofilament at 30°C (i.e. the temperature of the hot bath), the temperature of the hot air of the second drawing step was 35°C, and the temperature of the hot air of the third drawing step was 35°C.

The evaluation results of the polyether based thermoplastic polyurethane fiber of Comparative Embodiment 1 were listed in Table 1 rather than focusing or mentioning them in details.

### Comparative Embodiment 2

Comparative Embodiment 2 was practiced with the same method, raw materials, parameters (such as melt spinning temperature, surface linear velocity, drawing ratio and the like), and evaluation method as in Embodiment 2. The differences between Comparative Embodiment 2 and Embodiment 2 were that the temperatures of the first drawing roller pair, the second drawing roller pair and the third drawing roller pair of Comparative Embodiment 2 were all 30°C.

The evaluation results of the polyether based thermoplastic polyurethane fiber of Comparative Embodiment 2 were listed in Table 1 rather than focusing or mentioning them in details.

### Comparative Embodiment 3

Comparative Embodiment 3 was practiced with the same method, parameters (such as surface linear velocity and surface temperature of the roller pair, drawing ratio and the like), and evaluation method as in Comparative Embodiment 2. The differences between Comparative Embodiment 3 and Comparative Embodiment 2 were that Comparative Embodiment 3 used polyester based thermoplastic polyurethane materials (Shore D was 65D, melting point was 180°C, and melt flow index thereof was 23 with 2.16 kg of a loading at 210°C based on ASTM D1238) as raw materials, and temperatures of the segments between the inlet and the extrusion port were 220°C, 225°C and 230°C.

The evaluation results of the polyester based thermoplastic polyurethane fiber of Comparative Embodiment 3 were listed in Table 1 rather than focusing or mentioning them in details.

**Table 1**

| | | Embodiment 1 | Embodiment 2 | Comparative Embodiment 1 | Comparative Embodiment 2 | Comparative Embodiment 3 |
|---|---|---|---|---|---|---|
| fiber mateiral | | monofilament | multifilament | monofilament | multifilament | multifilament |
| TPU fiber | | polyether based | | | | polyester based |
| evaluation result | fineness | 350 D/f | 150 D/24f | 350 D/f | 150 D/24f | 150 D/24f |
| | tenacity (g/d) | 2.5 | 2.8 | 2.6 | 2.7 | 2.8 |
| | elongation at break (%) | 82 | 77 | 75 | 81 | 73 |
| | thermal shrinking ratio (%) | 5.7 | 3.5 | 23.8 | 21.2 | 22.7 |

### Aging Test

Further, for evaluating hydrolysis-resistant properties of the thermoplastic polyurethane fiber, the thermoplastic polyurethane fibers of Embodiment 3 (produced by the same method as in Embodiment 2 with slightly different parameters) and Comparative Embodiment 3 were disposed in an environment provided by standard evaluation method DIN 53543. Fineness, tenacity and elongation at break of the thermoplastic polyurethane fibers before disposing (i.e. 0 week) and after disposing a period of time were respectively measured, and the evaluation results were listed in Table 2.

**Table 2**

| | | Embodiment 3 | | | Comparative Embodiment 3 | | |
|---|---|---|---|---|---|---|---|
| | | polyether based TPU fiber | | | polyester based TPU fiber | | |
| | | fineness (D/24f) | tenacity (g/d) | elongation at break (%) | fineness (D/24f) | tenacity (g/d) | elongation at break (%) |
| disposing time | 0 week | 150 | 2.2 | 112 | 150 | 2.8 | 73 |
| | 1 week | 150 | 2.0 | 103 | 150 | 2.1 | 66 |
| | 2 week | 150 | 1.8 | 98 | 149 | 1.6 | 58 |
| | 3 week | 150 | 1.7 | 86 | 150 | 1.3 | 55 |

Based on Table 1, the method (i.e. Embodiments 1 and 2) of the present invention subjects the molten extruded fiber material to be extended at specific temperature, such that the hydrolysis-resistant thermoplastic polyurethane fiber has thermal shrinking ratio not larger than 10%.

Besides, based on Table 2, because the polyether based thermoplastic polyurethane fiber has much excellent hydrolysis-resistant properties than the polyester based thermoplastic polyurethane fiber, physical properties of the polyether based thermoplastic polyurethane fiber did not decay significantly as an increasing of the disposing time. However, the polyester based thermoplastic polyurethane fiber of Comparative Embodiment 3 was easily hydrolyzed to produce acid as an increasing of the disposing time, and further the acidic groups could catalyze the hydrolysis reaction of the polyester to lower physical properties of the fibers significantly.

As the above description, the method for producing the hydrolysis-resistant thermoplastic polyurethane fiber of the present invention excludes the crosslinking agent, and molten extruded fiber material is extended at specific temperature to release residual stresses in the materials. Therefore, the hydrolysis-resistant thermoplastic polyurethane fiber has thermal shrinking ratio not larger than 10% and excellent mechanical properties. Further, the thermoplastic polyurethane fiber of the present invention is polyether based thermoplastic polyurethane fiber, such that it has better hydrolysis-resistant properties. Besides, because the crosslinking reaction of the thermoplastic polyurethane material is performed in absence of the crosslinking agent, the molten extruded hydrolysis-resistant thermoplastic polyurethane fiber has excellent recyclability.

## Claims

1. A hydrolysis-resistant thermoplastic polyurethane fiber, wherein the hydrolysis-resistant thermoplastic polyurethane fiber comprises a polyether based thermoplastic polyurethane material, and the hydrolysis-resistant thermoplastic polyurethane fiber excludes a crosslinking agent, and
wherein a decreasing of tenacity of the hydrolysis-resistant thermoplastic polyurethane fiber is not larger than 10% based on a hydrolysis-resistant testing of DIN 53543.

2. The hydrolysis-resistant thermoplastic polyurethane fiber of claim 1, wherein the hydrolysis-resistant thermoplastic polyurethane fiber has a sheath-core structure or a single fiber structure.

3. The hydrolysis-resistant thermoplastic polyurethane fiber of any of claims 1-2, wherein a thermal shrinking ratio of the hydrolysis-resistant thermoplastic polyurethane fiber is not larger than 10%.

4. A method for producing a hydrolysis-resistant thermoplastic polyurethane fiber, comprising:
providing a thermoplastic polyurethane material, wherein the thermoplastic polyurethane material is a polyether based thermoplastic polyurethane material, and a melting point of the thermoplastic polyurethane material is 70°C to 180°C;
performing a melt spinning process to the thermoplastic polyurethane material to form a fiber material, wherein the fiber material includes a monofilament or a multifilament, and the melt spinning process excludes a crosslinking agent; and
performing a drawing process to the fiber material to form the hydrolysis-resistant thermoplastic polyurethane fiber, wherein the drawing process includes at least two drawing steps, and each of the drawing steps is performed at 60°C to 120°C.

5. The method for producing the hydrolysis-resistant thermoplastic polyurethane fiber of claim 4, wherein Shore D of the thermoplastic polyurethane material is 35D to 75D.

6. The method for producing the hydrolysis-resistant thermoplastic polyurethane fiber of any of claims 4-5, wherein a number of times of the drawing steps are two to four.

7. The method for producing the hydrolysis-resistant thermoplastic polyurethane fiber of any of claims 4-6, wherein each of the drawing steps is performed at 70°C to 110°C.

8. The method for producing the hydrolysis-resistant thermoplastic polyurethane fiber of any of claims 4-7, wherein a total drawing ratio of the fiber material is 1 to 3 in the drawing process.
